# EUROPEAN PATENT APPLICATION

(11) **EP 1 901 375 A1**
(43) Date of publication of application: **19.03.2008**
(21) Application number: 07014012.4
(22) Date of filing: 17.07.2007
(51) Int. Cl.: H01M 4/62

(54) **Cathode material containing two types of conductive materials and lithium secondary battery comprising the same**

(30) Priority: 28.08.2006 KR 20060081412
(71) Applicant: LG Chem, Ltd., Youngdungpo-gu, Seoul 150-721 (KR)
(72) Inventor: Chu, Seung Woo, Ansan-si Gyeonggi-do 426-170 (KR); Yoon, Sung-Pil, Jinju-si Gyeongsangnam-do 660-020 (KR); Lee, Dohyun, Yuseong-gu Daejeon 305-770 (KR); Kim, Dongmyung, Seo-gu Daejeon 203-280 (KR); Sung, Joo-Hwan, Seo-gu Daejon 302-120 (KR); Kim, Young Jeong, Yuseong-gu Daejeon 305-728 (KR); Yoon, Hyungook, Yuseong-gu Daejeon 305-751 (KR); Kim, Jong Hee, Yuseong-gu Daejeon 305-150 (KR)
(74) Representative: HOFFMANN EITLE

(57) **Abstract**

Provided is a cathode mix for a lithium secondary battery, comprising a cathode active material, a conductive material and a binder, wherein the cathode mix uses a mixture of a flake-like carbon material (a), and a spherical chain-like carbon material (b) in a weight ratio (a/b) of 0.01 to 1 as the conductive material; and a lithium secondary battery comprising the same.

Use of the conductive material according to the present invention can achieve simultaneous improvements in conductivity and loading density of the cathode mix, provide excellent discharge characteristics even with increased loading amounts of the cathode mix, and secure performance uniformity between the battery cells.

## Description

### FIELD OF THE INVENTION

The present invention relates to a cathode mix containing two types of conductive materials and a lithium secondary battery comprising the same. More specifically, the present invention relates to a cathode mix using a mixture of a flake-like carbon material (a) and a spherical chain-like carbon material (b) in a weight ratio (a/b) of 0.01 to 1 as conductive material for a cathode, and a lithium secondary battery comprising the same.

### BACKGROUND OF THE INVENTION

Recently, an explosive increase in the demand for portable electronic equipment has led to a rapid increase in the demand for secondary batteries. Among other things, there has been great advancement in lithium secondary batteries having high-energy density, high-discharge voltage and superior power output stability.

Generally, the lithium secondary battery is comprised of a structure having an electrode assembly composed of a cathode containing a lithium transition metal oxide as a cathode active material, an anode containing a carbonaceous material as an anode active material, a porous separator, and with impregnation of the electrode assembly with a lithium electrolyte. The cathode is fabricated by coating a cathode mix containing the lithium transition metal oxide on an aluminum foil, whereas the anode is fabricated by coating an anode mix containing a carbon-based active material on a copper foil.

In order to improve electrical conductivity of electrode active materials, a conductive material is usually added to the cathode mix and the anode mix. In particular, the lithium transition metal oxide used as the cathode active material is essentially low in the electrical conductivity and therefore the conductive material is inevitably added to the cathode mix. Among other things, a spherical chain-like conductive material is usually used to increase the conductivity of the cathode mix. However, such a spherical chain-like conductive material suffers from a disadvantage of difficulty to achieve a high loading density in a compression process to decrease a thickness of the cathode mix.

To this end, the present invention has adopted combined use of the flake-like carbon material (a) and a spherical chain-like carbon material (b) as the conductive material for the cathode, in order to increase the loading density of the cathode mix.

In this connection, Japanese Unexamined Patent Publication No. 2003-257416 discloses a technique wherein a mixture containing a Li-Co composite oxide having a mean particle size of 7-13 *µm* and a Li-Co composite oxide having a mean particle size of 1-6 *µm* in a specified ratio is used in a cathode active material, and a mixture containing a scale-like graphitized carbon having a mean particle size of 1-6 *µm* and carbon black having a mean particle size of 0.5 *µm* or less is used in a conductive material, in order to increase an electrode density while preventing formation of irregularities on a surface of an electrode mix layer which may occur upon compression of the cathode mix. According to the disclosure of this Japanese Patent, it is described that the desired surface flattening of the cathode mix layer can be achieved with the addition of a certain cathode active material in a specified ratio. Further, this Japanese Patent proposes that the preferred ratio of the scale-like graphitized carbon and carbon black as the conductive material is specified to a range of 1:0.01 to 0.1. However, the inventors of the present invention have confirmed that such a composition ratio suffers from problems associated with deterioration of performance consistency of the cathode mix and poor high-rate discharge characteristics of the cathode mix. In particular, when a loading amount of the electrode mix coated on a current collector is increased to achieve improved capacity of the secondary battery, this may lead to further deterioration of the battery performance. Therefore, the conductive material having a composition range specified in the above Japanese Patent is undesirable.

Meanwhile, secondary batteries with high-energy density employ limited amounts of conductive material and binder, in order to increase the amount of cathode active material contained in the cathode mix. When a large amount of the scale-like graphitized carbon having poor electrical conductivity as discussed before is used in a limited amount of the conductive material, this may lead to deviation of electrical conductivity within the thus-applied cathode mix, thereby causing performance inhomogeneity between battery cells. Such non-uniformity of the battery performance results in abnormal operation and malfunction of the battery in the medium/large-size device using a plurality of battery cells, thereby presenting various problems.

### SUMMARY OF THE INVENTION

Therefore, the present invention has been made to solve the above problems and other technical problems that have yet to be resolved.

As a result of a variety of extensive and intensive studies and experiments to solve the problems as described above, the inventors of the present invention have discovered that upon the use of a mixture of a flake-like carbon material (a) and a spherical chain-like carbon material (b) in a specific weight ratio as a conductive material for a cathode mix, it is possible to simultaneously improve conductivity and loading density of the cathode mix, to provide excellent discharge characteristics even with increased loading amounts of the cathode mix, and to secure performance uniformity between the battery cells according to use of the conductive material. The present invention has been completed based on these findings.

### DETAILED DESCRIPTION OF PREFERRED EMBODIMENTS

In accordance with an aspect of the present invention, the above and other objects can be accomplished by the provision of a cathode mix for a lithium secondary battery, comprising a cathode active material, a conductive material and a binder, wherein a mixture of a flake-like carbon material (a) and a spherical chain-like carbon material (b) in a weight ratio (a/b) of 0.01 to 1 is used as the conductive material.

Even though basic physical properties of the flake-like carbon material (a) and the spherical chain-like carbon material (b) were known in the art, it was confirmed that physical properties of the conductive material obtained by combination of Component (a) and Component (b), as also can be seen in the following Experimental Examples, exhibit significant synergistic effects above the physical properties which were generally expected to be achieved.

Component (a) is a flake-like carbon material having physical properties that enable realization of a high loading density, and may be preferably selected from the group consisting of SP270, KS6, KS 10, KS15, and any combination thereof. Component (b) is a spherical chain-like carbon material having high conductivity, and may be preferably selected from the group consisting of acetylene black, Denka black, Super-P, and any combination thereof.

In order to exert high-discharge characteristics while achieving a maximized increase of a loading density upon compression of the cathode mix, the conductive material having an above-specified composition may be composed of Component (a) having an average particle size of 1 to 50 µm and a surface area of 10 to 500 m²/g, and Component (b) having an average particle size of 10 to 200 nm and a surface area of 10 to 100 m²/g. This is because it is possible to maximize the loading density increase of the cathode mix by taking advantage of slip phenomenon of a non-spherical cathode active material due to the presence of flake-like conductive material, upon compression of the cathode mix, and it is also possible to optimize discharge characteristics by a specific surface area composition.

The flake-like carbon material and the spherical chain-like carbon material, used as the conductive material in the cathode mix of the present invention, are mixed in a composition ratio of 0.01 to 1, as discussed above. If the composition ratio is lower than 0.01, this leads to deterioration of loading-density increasing effects in a compression process of the cathode mix, which therefore results in an increase in stress applied to a current collector with increasing compression force or increasing numbers of compression to get the desired high loading density, consequently presenting problems such as electrode breakage. On the other hand, if the composition ratio is higher than 1, this leads to deterioration of electrical conductivity, thereby decreasing discharge characteristics and increasing the inhomogeneity of performance. More preferably, the composition ratio of carbon material is in the range of 0.7 to 1.

The cathode mix is composed of the cathode active material with incorporation of above-mentioned conductive material and binder. If necessary, a filler may be further added to the cathode mix.

Examples of the cathode active materials that can be used in the present invention may include, but are not limited to, layered compounds such as lithium cobalt oxide (LiCoO₂) and lithium nickel oxide (LiNiO₂), or compounds substituted with one or more transition metals; lithium manganese oxides such as compounds of Formula Lii+xMn₂-ₓO₄ (0≤x≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni-site type lithium nickel oxides of Formula LiNi₁₋ₓMₓO₂ (M = Co, Mn, Al, Cu, Fe, Mg, B, or Ga, and 0.01≤x≤0.3); lithium manganese composite oxides of Formula LiMn₂₋ₓMₓO₂ (M = Co, Ni, Fe, Cr, Zn, or Ta, and 0.01≤x≤0.1), or Formula Li₂Mn₃MO₈ (M = Fe, Co, Ni, Cu, or Zn); LiMn₂O₄ wherein a portion of Li is substituted with alkaline earth metal ions; disulfide compounds; Fe₂(MoO₄)₃, LiFe₃O₄; and ternary compounds represented by Formula LiNiₓMnyCo_{z}O₂ (x + y + z = 1).

The binder is a component assisting in binding between the active material and the conductive material, and in binding with the current collector. The binder is typically added in an amount of 0.5 to 30% by weight, based on the total weight of the mixture including the cathode active material. As examples of the binder, mention may be made of polyvinylidene fluoride, polyvinyl alcohols, carboxymethylcellulose (CMC), starch, hydroxypropylcellulose, regenerated cellulose, polyvinyl pyrollidone, tetrafluoroethylene, polyethylene, polypropylene, ethylene-propylene-diene terpolymer (EPDM), sulfonated EPDM, styrene butadiene rubber, fluoro rubber, and various copolymers.

The filler is an optional ingredient used to inhibit cathode expansion. There is no particular limit to the filler, so long as it does not cause chemical changes in the fabricated battery and is a fibrous material. As examples of the filler, there may be used olefin polymers such as polyethylene and polypropylene; and fibrous materials such as glass fiber and carbon fiber.

In accordance with another aspect of the present invention, there is provided a lithium secondary battery comprising a cathode to which the above-mentioned cathode mix was applied.

The cathode is fabricated, for example by adding the cathode mix to a suitable solvent such as NMP to prepare a slurry, and applying the resulting slurry to a current collector, followed by drying and pressing.

The cathode current collector is generally fabricated to have a thickness of 3 to 500 *µ*m. There is no particular limit to materials for the cathode current collector, so long as they have high conductivity without causing chemical changes in the fabricated battery. As examples of the materials for the cathode current collector, mention may be made of stainless steel, aluminum, nickel, titanium, sintered carbon, and aluminum or stainless steel which was surface-treated with carbon, nickel, titanium, or silver. The current collector may be fabricated to have fine irregularities on the surface thereof so as to enhance adhesion to the cathode active material. In addition, the current collector may take various forms including films, sheets, foils, nets, porous structures, foams, and non-woven fabrics.

The lithium secondary battery according to the present invention is comprised of the thus-fabricated cathode, an anode, a separator, and a lithium salt-containing non-aqueous electrolyte.

The anode is fabricated by applying an anode material to a current collector, followed by drying and pressing. If necessary, other components as described above may be further included.

The anode current collector is generally fabricated to have a thickness of 3 to 500 µm. There is no particular limit to materials for the anode current collector, so long as they have suitable conductivity without causing chemical changes in the fabricated battery. As examples of materials for the anode current collector, mention may be made of copper, stainless steel, aluminum, nickel, titanium, sintered carbon, copper or stainless steel having a surface treated with carbon, nickel, titanium or silver, and aluminum-cadmium alloys. Similar to the cathode current collector, the anode current collector may also be processed to form fine irregularities on the surfaces thereof so as to enhance adhesion to the anode active material. In addition, the anode current collector may be used in various forms including films, sheets, foils, nets, porous structures, foams, and non-woven fabrics.

As examples of the anode materials utilizable in the present invention, mention may be made of carbon such as non-graphitizing carbon and graphite-based carbon; metal composite oxides such as LiₓFe₂O₃ (0≤x≤1), Liₓ WO₂(0≤Sx≤1) and SnₓMe₁₋ₓMe'_{y}O_{z} (Me: Mn, Fe, Pb or Ge; Me': Al, B, P, Si, Group I, Group II, and Group III elements of the Periodic Table of the Elements, or halogens; 0<x≤1; 1≤y≤3; and 1≤z≤8); lithium metals; lithium alloys; silicon-based alloys; tin-based alloys; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni based materials.

The separator is interposed between the cathode and the anode. As the separator, an insulating thin film having high ion permeability and mechanical strength is used. The separator typically has a pore diameter of 0.01 to 10 µm and a thickness of 5 to 300 µm. As the separator, sheets or non-woven fabrics made of an olefin polymer such as polypropylene and/or glass fibers or polyethylene, which have chemical resistance and hydrophobicity, are used. When a solid electrolyte such as a polymer is employed as the electrolyte, the solid electrolyte may also serve as both the separator and electrolyte.

The lithium salt-containing non-aqueous electrolyte is composed of a non-aqueous electrolyte and a lithium salt. As the non-aqueous electrolyte, a non-aqueous electrolytic solution, a solid electrolyte or an inorganic solid electrolyte may be utilized.

As the non-aqueous electrolytic solution that can be used in the present invention, for example, mention may be made of aprotic organic solvents such as N-methyl-2-pyrrolidone, propylene carbonate, ethylene carbonate, butylene carbonate, dimethyl carbonate, diethyl carbonate, gamma-butyro lactone, 1,2-dimethoxy ethane, tetrahydroxy Franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

As examples of the organic solid electrolyte utilized in the present invention, mention may be made of polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

As examples of the inorganic solid electrolyte utilized in the present invention, mention may be made of nitrides, halides and sulfates of lithium such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt is a material that is readily soluble in the above-mentioned non-aqueous electrolyte and may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imide.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the non-aqueous electrolyte. If necessary, in order to impart incombustibility, the non-aqueous electrolyte may further include halogen-containing solvents such as carbon tetrachloride and ethylene trifluoride. Further, in order to improve high-temperature storage characteristics, the non-aqueous electrolyte may additionally include carbon dioxide gas.

In one preferred embodiment of the present invention, the lithium salt-containing non-aqueous electrolyte may be prepared by adding a lithium salt, such as LiPF₆, LiClO₄, LiBF₄, or LiN(SO₂CF₃)₂, to a mixed solvent of a cyclic carbonate such as EC or PC as a high dielectric solvent, with a linear carbonate such as DEC, DMC or EMC as a low-viscosity solvent.

The electrode assembly having the above-mentioned configuration composed of the cathode, anode and separator may be fabricated in various forms including a Jelly-roll structure (winding type), a stack structure (laminating type), and the like.

The lithium secondary battery according to the present invention may be preferably used in medium/large-size battery packs including a plurality of unit cells owing to high cell capacity, excellent discharge characteristics and uniform cell performance. Configuration and fabrication of the medium/large-size battery packs can be carried out by a conventional method known in the art, and therefore details thereof will be omitted in this specification.

### EXAMPLES

Now, the present invention will be described in more detail with reference to the following examples. These examples are provided only for illustrating the present invention and should not be construed as limiting the scope and spirit of the present invention.

### [Example 1]

LiCoO₂ as a cathode active material, a mixture of SP270 having an average particle size of 5 µm and a surface area of 260 m²/g and acetylene black having an average particle size of 45 nm and a surface area of 75 m²/g (0.01:1, w/w) as a conductive material, and 3% by weight of PVdF as a binder were mixed to prepare a cathode mix which was then stirred in N-methyl-2-pyrrolidone (NMP) as a solvent to thereby prepare a cathode slurry. Thereafter, the resulting cathode slurry was coated on aluminum (Al) foil as a metal current collector which was then dried in a vacuum oven at 120□ for more than 2 hours and compressed to fabricate a cathode having a proper density.

In addition, an electrode assembly was fabricated using the thus-fabricated cathode, an anode fabricated by coating an anode mix containing artificial graphite MCMB (mesocarbon microbead) on copper foil, and a porous polypropylene separator. The resulting electrode assembly was wound and placed in a prismatic aluminum can, followed by injection of a solution of 1M LiPF₆ in ethylene carbonate (EC) and dimethyl carbonate (DMC) (1:1, v/v) as an electrolyte and sealing the resulting structure to thereby fabricate a lithium secondary battery.

### [Example 2]

A cathode and a lithium secondary battery were fabricated in the same manner as in Example 1, except that a mixture of SP270 and acetylene black in a ratio of 0.1:1 (w/w) was used as a conductive material.

### [Example 3]

A cathode and a lithium secondary battery were fabricated in the same manner as in Example 1, except that a mixture of SP270 and acetylene black in a ratio of 0.7:1 (w/w) was used as a conductive material.

### [Example 4]

A cathode and a lithium secondary battery were fabricated in the same manner as in Example 1, except that a mixture of SP270 and acetylene black in a ratio of 1:1 (w/w) was used as a conductive material.

### [Comparative Example 1]

A cathode and a lithium secondary battery were fabricated in the same manner as in Example 1, except that SP270 was used alone as a conductive material.

### [Comparative Example 2]

A cathode and a lithium secondary battery were fabricated in the same manner as in Example 1, except that acetylene black was used alone as a conductive material.

### [Comparative Example 3]

A cathode and a lithium secondary battery were fabricated in the same manner as in Example 1, except that a mixture of SP270 and acetylene black in a ratio of 1.5:1 (w/w) was used as a conductive material.

### [Experimental Example 1]

Resistance of the cathodes fabricated in Examples 1 to 4 and Comparative Examples 1 and 2 was measured. In addition, breakage of cathode current collectors was examined during the winding of electrode assemblies composed of the cathodes thus fabricated. The results thus obtained are given in Table 1 below. The thickness of the cathode current collectors used in Examples 1 to 4 and Comparative Examples 1 and 2 was the same, e.g. 8 µm, and compression force was applied to achieve a cathode mix loading density of 3.712 g/cc.

**<Table 1>**

| | Resistance (Ω/cm) × 10³ | Breakage of cathode current collector upon winding of electrode assembly |
|---|---|---|
| Comp. Example 1 | 230 | No breakage |
| Comp. Example 2 | 23.9 | Breakage occurred |
| Example 1 | 27 | No breakage |
| Example 2 | 42 | No breakage |
| Example 3 | 48 | No breakage |
| Example 4 | 50 | No breakage |

As can be seen from the results of Table 1, batteries of Examples 1 to 4 according to the present invention exhibited low resistance and high conductivity, and showed no breakage of the cathode current collector upon winding of the electrode assembly. In particular, the cathode of Example 4 exhibited no breakage of the cathode current collector upon winding of the electrode assembly, even though it was compressed until the loading density of the cathode mix reached to 3.857 g/cc. On the other hand, the battery of Comparative Example 1 exhibited very high resistance even with no breakage of the cathode current collector upon winding of the electrode assembly, whereas the battery of Comparative Example 2 exhibited low resistance with breakage of the cathode current collector upon winding of the electrode assembly.

### [Experimental Example 2]

Charge/discharge capacity of the batteries fabricated in Example 3 and Comparative Example 3 was measured, and discharge efficiency and standard deviation (SD) were calculated. The results thus obtained are given in Table 2 below. Loading of the cathode mix was set to 3.153 mAh/cm² and 3.025 mAh/cm² for the batteries of Example 3 and Comparative Example 3, respectively. In addition, the discharge efficiency and standard deviation (SD) were calculated from the charge and discharge capacity measured with varying C-rates in 20 batteries. Table 2 below shows the discharge efficiency as an average value of the discharge capacity to the charge capacity. The discharge efficiency of each battery for such an average value was given with its standard deviation (SD).

**<Table 2>**

| | Example 3 | | Comp. Example 3 | |
|---|---|---|---|---|
| | Efficiency (%) | SD (%) | Efficiency (%) | SD (%) |
| 0.1 C | 100 | 0.00 | 100 | 0.00 |
| 0.2 C | 99.06 | 0.1 | 98.86 | 0.23 |
| 0.5 C | 96.86 | 0.07 | 96.58 | 0.61 |
| 1 C | 92 | 0.36 | 91.59 | 1.60 |
| 1.5 C | 59.84 | 1.36 | 54.97 | 5.97 |

As can be seen from the results of Table 2, batteries of Example 3 according to the present invention exhibited high discharge efficiency and low standard deviation (SD) at both of low-rate discharge and high-rate discharge, even with increased loading amounts of the cathode mix, as compared to batteries of Comparative Example 3. In particular, since batteries of Example 3 exhibited low standard deviation (SD), it was confirmed that such batteries can be easily applied without causing adverse side effects on battery performance and safety when it is desired to fabricate a large-capacity battery pack by multiple combination of lithium secondary batteries according to the present invention.

### [Experimental Example 3]

Cathodes fabricated in Example 3 and Comparative Example 2 were compressed to a desired density of a cathode mix, and a distance between press rolls was measured. The results thus obtained are given in Table 3 below. The same pressure of 8 MPa was applied to the press rolls. The roll-to-roll distance was set on the basis of a relative value "0", indicating that getting closer to a positive value means an increase in the roll-to-roll distance and getting closer to a negative value means a decrease in the roll-to-roll distance. That is, when the cathode mix was compressed to a desired density under the same pressure, loading-density increasing effects were compared by measuring the compression degree in terms of the roll-to-roll distance.

**<Table 3>**

| | Distance between press rolls | |
|---|---|---|
| Electrode density (g/cc) | Example 3 | Comp. Example 2 |
| 3.594 | 0.025 | 0.005 |
| 3.658 | -0.045 | -0.06 |
| 3.750 | -0.097 | -0.113 |

As can be seen from the results of Table 3, the cathodes of Example 3 according to the present invention could easily realize the desired density of cathode mix even under low compression stress. That is, when the cathode mix was compressed to the desired density under the same pressure, the cathodes of Example 3 exhibited a small distance between the press rolls, as compared to the electrodes of Comparative Example 2, indicating that less amounts of compression stress are applied to a cathode current collector of the present invention. As a result, low compression stress applied upon compression of the electrode leads to less breakage of the cathode current collector, and it is thereby possible to realize a high loading density.

### INDUSTRIAL APPLICABILITY

As apparent from the above description, a cathode mix according to the present invention and a lithium secondary battery comprising the same can achieve simultaneous improvements in both of conductivity and loading density of the cathode mix, provide excellent discharge characteristics even with increased loading amounts of the cathode mix, and secure performance uniformity between the battery cells via use of the conductive material according to the present invention.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A cathode mix comprising a cathode active material, a conductive material and a binder, wherein a mixture of a flake-like carbon material (a) and a spherical chain-like carbon material (b) in a weight ratio (a/b) of 0.01 to 1 is used as the conductive material.

2. The cathode mix according to claim 1, wherein Component (a) is selected from the group consisting of SP270, KS6, KS 10, KS 15, and any combination thereof.

3. The cathode mix according to claim 1, wherein Component (b) is selected from the group consisting of acetylene black, Denka black, Super-P, and any combination thereof.

4. The cathode mix according to claim 1, wherein Component (a) has an average particle size of 1 to 50 *µ*m and a surface area of 10 to 500 m²/g.

5. The cathode mix according to claim 1, wherein Component (b) has an average particle size of 10 to 200 nm and a surface area of 10 to 100 m²/g.

6. The cathode mix according to claim 1, wherein the ratio of a/b is in the range of 0.7 to 1.

7. A lithium secondary battery comprising a cathode to which the cathode mix of claim 1 is applied.

8. A medium/large-size battery pack comprising a plurality of lithium secondary batteries of claim 7 as a unit cell.
